# EUROPÄISCHE PATENTSCHRIFT

(11) **EP 0 598 351 B1**
(45) Veröffentlichungstag und Bekanntmachung des Hinweises auf die Patenterteilung: **12.03.1997**
(21) Anmeldenummer: 93118323.0
(22) Anmeldetag: 12.11.1993
(51) Int. Cl.: F16M 1/00

(54) **Gehäuse für freistehende Automaten und dergleichen**
Casing for free-standing automatic machines and same
Carter pour appareils automatiques isolés et analogues

(30) Priorität: 14.11.1992 DE 9215530 U
(43) Veröffentlichungstag der Anmeldung: 25.05.1994
(73) Patentinhaber: VDO Adolf Schindling AG, 60326 Frankfurt/Main (DE)
(72) Erfinder: Schuh, Eduard, D-78048 Villingen-Schwenningen (DE); Gundel, Walter, Dipl.-Ing., D-78052 Villingen-Schwenningen (DE)

(56) Entgegenhaltungen:
- DE-A- 3 444 668
- DE-U- 9 215 530
- US-A- 3 132 910
- US-A- 3 878 928
- PATENT ABSTRACTS OF JAPAN, Band 16, Nr. 366 (M-1291), 7. August 1992; & JP-A-04
- 116 010 (DAIFUKU) 16-04-1992

## Beschreibung

Die Erfindung betrifft ein Gehäuse für freistehende Automaten und dergleichen, bei welchen das Verhältnis der Stellflächenabmessungen zur Höhe relativ klein ist und für die Gehäusewände einzelne in Strangpreßtechnik aus Aluminium hergestellte, der Höhe des Gehäuses entsprechene Wandelemente vorgesehen sind.

Derartige Gehäuse, beispielsweise für Tanksäulen, Parkscheinautomaten, Briefkästen mit Wertzeichengebern, Kassen für durch Schranken abgesperrte Parkplätze sind wegen der geforderten Einbruchsicherheit in der Regel aus Stahlblechteilen aufgebaut, die durch Schweissen oder Nieten miteianander verbunden sind. Aufgrund der Aufstellung solcher Gehäuse im Freien wird für das als Gehäusematerial verwendete Stahlblech ein hohes Maß an Korrosionsschutz erforderlich. Außerdem ist der Montage- und Fertigungsaufwand erheblich, da abgesehen von Biege- und Schweissarbeiten Blechstärken zu erarbeiten sind, die Spezialmaschinen erforderlich machen und die die Handhabung und den Transport der Gehäuseteile und Gehäuse aufgrund des relativ hohen Gewichtes erschweren. Einen hohen Montageaufwand erfordert ferner das Anbringen der für Einschübe oder Einbauten erforderlichen Zwischenböden, sowie das Anbringen von Türen und Klappen zugeordneten Scharnierelementen, wofür in der Regel ebenfalls Schweissarbeiten an den Gehäusewänden erforderlich werden.

Diese klassische, für die Einzelfertigung unkritische Bauweise, ist für die Serienfertigung mit dem Anspruch auf möglichst wenig Arbeitsgänge, vormontierbare Baugruppen und hoher Reproduzierbarkeit sowie einer konsequenten Verwendung von Normteilen und Halbzeugen wenig geeignet.

Mit der DE-A-3 444 668 ist bekannt geworden für Gehäusewände Strangpreßprofile vorzusehen und diese mittels geeigneter Eckteile zu verbinden. Außerdem ist es, wie aus der DE-A-3 444 668 und aus der JP-A-4-116 010 hervorgeht bekannt, an den Profilteilen Gewindekanäle zur Befestigung von Funktionsgruppen oder lediglich Wandelementen auszubilden. Das Verbinden von stranggepreßten Gehäusewänden über Eckverbinder gemäß der DE-A-3 444 668 bietet zwar den Vorteil einer seriengerechten Zurichtung von Bauteilen, es sind jedoch wenigstens vier Eckverbinder für ein Gehäuse erforderlich, die durch Einpressen und gegebenenfalls Verkleben montiert werden, was bei dem gattungsgemäßen, relativ hohen Gehäusetyp erhebliche Schwierigkeiten bereiten kann. Außerdem ist eine solche Gehäusearchitektur verwindungsempfindlich und somit nicht ausreichend einbruchsicher.

Die Aufgabe der Erfindung besteht somit darin, ein für den geschilderten Anwendungsbereich geeignetes Gehäuse zu schaffen, dessen Fertigungs- und Montageaufwand sowie dessen Gewicht erheblich reduziert sind, das ferner den Anforderungen in Bezug auf Einbruchsicherheit gerecht wird und eine zufriedenstellende Serienfertigungsfähigkeit bietet.

Die erfindungsgemäße Lösung der Aufgabe sieht vor, daß Zwischenböden vorgesehen sind, welche in Ebenen quer zu den Wandelementen angeordnet sind und mit welchen die Wandelemente sich gegenseitig überlappend verschraubt sind.

Die Erfindung bietet den Vorteil, daß die Wandelemente in beliebiger, d. h. in einer der Höhe der herzustellenden Gehäuse entsprechenden Länge lediglich von den jeweiligen als Halbzeuge vorliegenden Stangpreßprofilen abgelängt werden müssen. Dabei können die Wandelemente an den Innenseiten bereits mit über die gesamte Länge sich erstreckenden Gewindekanälen versehen sein. Außerdem können wenigstens für eine gegenseitige labyrinthische Dichtung geeignete Konturen ausgebildete sein. Die Aussenseiten der Wandelemente können selbstverständlich entsprechend ästhetischer Vorstellungen strukturiert sein. Eine Nachbearbeitung der Wandelemente und ein zusätzlicher Korrosionsschutz ist bei der Verwendung von Aluminium-Stangpreßprofilen jdenfalls nicht erforderlich.

Insbesondere schlägt die Erfindung vor, daß an den Wandelementen jeweils einen Gewindekanal einschließende Schienen angeformt sind, daß die Zwischenböden unmittelbar mit den Gewindekanälen verschraubt sind und daß an den Zwischenböden sämtliche Führungs- und Befestigungsmittel für Einschübe und Einbauten, Scharnierelemente für Türen und Klappen sowie Mittel zum Befestigen der Wandelemente ausgebildet bzw. angeordnet sind.

Vorteilhaft ist ferner, daß das Zusammenfügen von Gehäusewänden aus einzelnen Wandelementen einen größeren Gestaltungsspielraum zuläßt, d. h. Gehäuse mit unterschiedlichen Querschnitten auf einfache Weise gestaltet werden können. Andererseits können die Wandelemente für Umrüstungen wiederverwendet oder ein, beispielsweise bei einem Einbruchsversuch beschädigtes Wandelement, ersetzt werden. Die Anpassung der Materialstärke der Wandelemente an Forderungen, die mit der Einbruchsicherheit zusammenhängen bzw. mit einem zeitlich befristeten Einbruchswiderstand, sind strangpreßtechnisch leichter erfüllbar, und zwar mit einem wesentlich geringeren Gehäusegewicht als bei Verwendung von Stahlblech.

Den in Ebenen quer zu den Wandelementen vorgesehenen Zwischenböden bzw. Zwischenrahmen, kommt bei der vorgeschlagenen Gehäusearchitektur eine tragende und das Gehäuse versteifende, insbesondere gegen Verwindung stabilisierende Funktion zu, in dem sowohl die Wandelemente mit den Zwischenböden verschraubt sind als auch Befestigungsvorkehrungen getroffen sind für den Einbau von Baugruppen, das Einsetzen von Einschüben und das Anschlagen von Türen und Klappen. Aufgrund der auf der gesamten Länge der Wandelemente durchgehenden Gewindekanäle, die eine von außen unsichtbare Befestigung ermöglichen, ist bei der Montage der Zwischenböden leicht ein Toleranzausgleich möglich, mit anderen Worten, eine Änderung in der Höhenlage eines Zwischenbodens ohne weiteres durchführbar, so daß Anpassungen an Kundenwünsche auch nachträglich berücksichtigt werden können und letzten Endes eine größere Flexibilität beim Umrüsten eines Gerätes gegeben ist. Außerdem lassen sich mehrere Zwischenböden vorsehen oder ein zusätzlicher Zwischenboden nachträglich ohne Bohrarbeiten einbauen und vorhandene in ihrer Lage verschieben, da Wandelemente und Zwischenböden lösbar miteinander verbunden sind und die Ausbildung von Gewindekanälen eine in der Höhe stufenlose Anordnung der Zwischenböden gestattet. Auf der anderen Seite stellen die Zwischenböden eine vorfertigbare Baugruppe dar, an der Mittel ausgebildet sind, die eine genaue Lagefixierung der Wandelemente ermöglichen. Andererseits gleichen sich durch die Verwendung einzelner Wandelemente die Toleranzen in der Breite und der Tiefe der Gehäuse selbsttätig aus.

Im folgenden sei die Erfindung anhand von Zeichnungen näher erläutert. Es zeigen:

Fig. 1 eine Übersichtsdarstellung eines erfindungsgemäß gestalteten Gehäuses.

Fig. 2 einen Ausschnitt des Gehäuses gemäß Fig. 1 in perspektifischer Darstellung.

Fig. 3 eine Schemaskizze des Querschnitts eines Gehäuses, dessen Frontseite an einer breiten Gehäusewand vorgesehen ist.

Fig. 4 eine Schemaskizze des Querschnitts eines Gehäuses, dessen Frontseite an einer schmalen Gehäusewand vorgesehen ist.

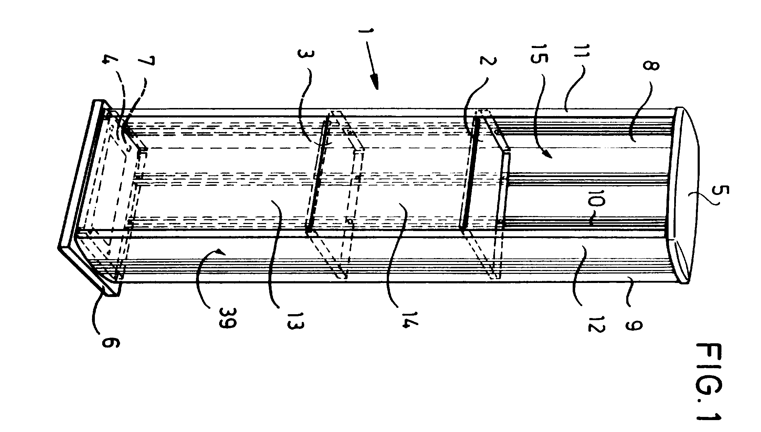

Wie aus der Übersichtsdarstellung Fig. 1 ersichtlich ist, besteht das als Ausführungsbeispiel dargestellte Gehäuse 1 aus einem ersten und einem zweiten Zwischenboden 2 und 3, einem Montagerahmen 4 und einem Dachelement 5, das, was nicht dargestellt ist, ebenfalls auf einem Rahmen befestigt ist. Dem Montagerahmen 4, mittels dessen das Gehäuse 1 auf beispielsweise einem nicht dargestellten Betonsockel befestigt wird, ist ein Blendrahmen 6 zugeordnet. Im Montagerahmen 4 vorgesehene Bohrungen, von denen eine mit 7 bezeichnet ist, dienen dem Durchführen von im Betonsockel eingebetteten Gewindebolzen. Bis auf die Frontseite sind die Wände des Gehäuses 1 aus einzelnen der Höhe des Gehäuses 1 entsprechenden Wandelementen zusammengefügt, die aus Aluminium in Strangpreßtechnik hergestellt sind. Dabei sind zwei gleichgestaltete Winkelprofil-Wandelemente 8 und 9, denen ein verbindendes Zwischenwandelement 10 zugeordnet ist und zwei gleichgestaltete Frontrahmen-Wandelemente 11 und 12 vorgesehen. Mit 13 ist eine einen Teil der Frontwand bildende Abdeckplatte bezeichnet. 14 bezeichnet eine Tür oder Klappe und 15 stellt beispielsweise eine Öffnung dar für einen auf dem Zwischenboden 2 verschiebbaren Einschub.

Dieses Gehäusekonzept könnte beispielsweise für einen Parkscheinautomaten vorgesehen werden, wobei im unteren Raum die Stromversorgungsaggregate angeordnet sind, im mittleren Abschnitt sich die Münzkassette befindet und der im oberen Abschnitt einführbarer Einschub die üblichen Funktionseinheiten für die Münzverarbeitung und dem Parkscheindruck beinhaltet. In diesem Falle befindet sich im Zwischenboden 2 eine Öffnung für den Durchtritt von Münzen in die mit einem geeigneten Verriegelungsmechanismus versehene Münzkassette.

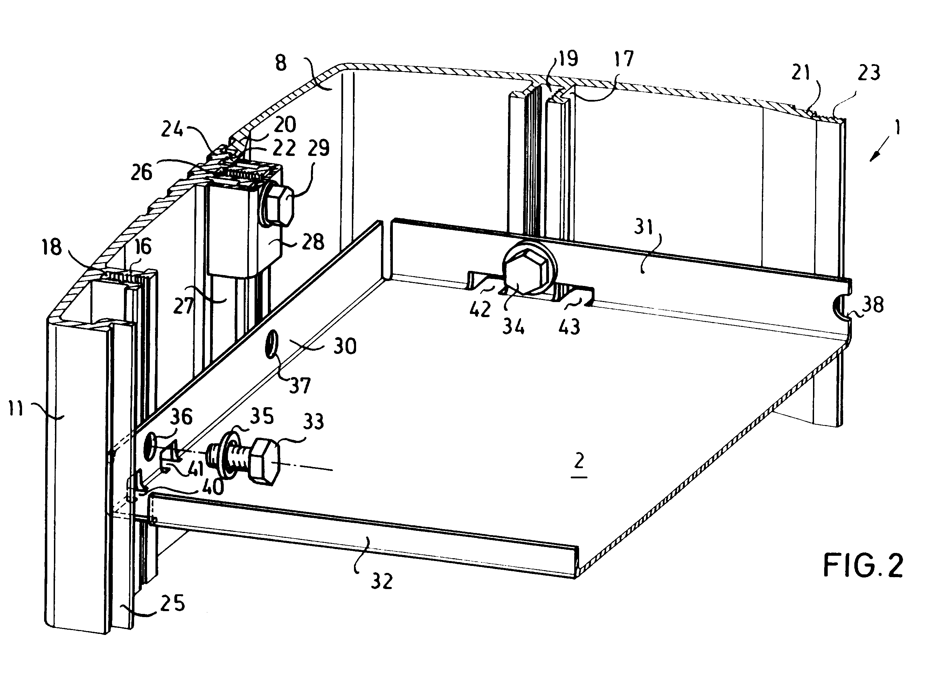

Die Fig. 2 zeigt in dem dargestellten Ausschnitt des Gehäuses 1, wie die beiden Wandelemente 8 und 11 mit dem Zwischenboden 2 verbunden sind. An den Wandelementen 8 und 11 sind jeweils wenigstens eine Schiene 16 bzw. 17 angeformt, welche einen Gewindekanal 18 bzw. 19 einschließt, an dessen gegenüberliegenden Wänden jeweils ein um eine halbe Steigung versetztes Gewindeprofil ausgebildet ist. Die Enden 20 und 21 der Schenkel des Wandelementes 8 sind jeweils mehrstufig geformt, wobei die Stufen nach außen weisen und wenigstens auf einer Stufe eine Riffelung 22 und 23 ausgebildet ist. Dementsprechend ist das eine Ende 24 des Wandelementes 11 derart ausgebildet, daß die Stufen nach innen weisen, so daß sich beim überlappenden Zusammenfügen der Wandelemente 8 und 11 eine wenigstens staubdichte Labyrinthdichtung bildet. Das andere Ende 25 des Wandelementes 11 ist an der Frontseite des Gehäuses 1 abgewinkelt und derart gestaltet, daß ein Dichtungs- oder Anschlagprofilteil aufgesetzt werden kann.

Wie aus der Fig. 2 ferner hervorgeht, ist an dem Wandelement 11 eine weitere, einen Gewindekanal 26 einschließende Schiene 27 angeformt, und zwar unmittelbar parallel zum Überlappungsbereich der beiden Wandelemente 8 und 11. Der Gewindekanal 26 kann der zusätzlichen Befestigung des Zwischenbodens 2 dienen. Er ist jedoch in erster Linie dazu bestimmt, die beiden Wandelemente 8 und 11 unter Verwendung eines u-förmig geformten Klemmstücks 28 lösbar aneinander zu befestigen. Dabei können mehrere kurze Klemmstücke auf der Länge des Gehäuses 1 oder ein einziges durchgehendes Klemmstück vorgesehen werden. Jedenfalls stützt sich das die Schiene 27 mit geringem Spiel umgreifende Klemmstück 28 beim Anziehen der ihm zugeordneten Schraube 29 einerseits auf dem Wandelement 8 andererseits auf dem Wandelement 11 ab, wodurch die Wandelemente 8 und 11 im Überlappungsbereich gegenseitig verspannt werden. Ein derartiges gegeneitiges Verspannen der Wandelemente ist jedoch nicht zwingend erforderlich bzw.nur dann erforderlich, wenn besonders hohe Anforderungen an die Eingriffsicherheit gestellt werden.

Unter der Voraussetzung, daß sich an das Wandelement 8 ein gleiches Winkelprofil-Wandelement 9 anschließt und der Abstand zwischen den beiden Wandelementen gering ist, ist das zu verwendende Zwischenwandelement 10 ebenfalls mit einem Gewindekanal versehen. Ein dem Zusammenspannen und Verbinden der Wandelemente 8 und 9 dienendes Klemmstück stützt sich in diesem Falle beim Anziehen der betreffenden Schrauben auf beiden Wandelementen 8 und 9 ab und das t-förmige Zwischenwandelement 10 wird von außen gegen beide Wandelemente 8 und 9 gepreßt und entweder nur mit diesen verbunden oder zusätzlich mit dem Zwischenboden 2 verschraubt. Ist ein größerer Abstand durch ein Zwischenwandelement zu überbrücken, so werden an dem dann breiteren Zwischenwandelement zwei Gewindekanäle vorzugsweise unmittelbar parallel zu den Überlappungsbereichen ausgebildet.

Wie ferner aus Fig. 2 ersichtlich ist, sind an dem aus Stahlblech gefertigten Zwischenboden 2 Wangen 30, 31 und 32 angebogen, die sowohl der Versteifung des Zwischenbodens 2 als auch dem Befestigen der Wandelemente 8 und 11 dienen, in dem Schrauben 33 und 34 in die Gewindekanäle 18 und 19 eingeschraubt werden. Der mit einer Unterlagscheibe 35 zusammenwirkenden Schraube 33 ist hierfür in der Wange 30 eine Durchgangsbohrung 36 zugeordnet. Für weitere Verschraubungen des Zwischenbodens 2 mit dem Wandelement 11 und dem Zwischenwandelement 10 sind Durchgangsbohrungen 37 und 38 vorgesehen. Es sei noch erwähnt, daß in dem dargestellten Ausführungsbeispiel die Wandelemente gewölbt ausgebildet sind und daß durch Ausbildung mehrerer paralleler Nuten in den Überlappungsbereichen einerseits der Überlappungsspalt kaschiert wird, andererseits ein mit 39 bezeichnetes Stilelement geschaffen ist.

Funktionell von Bedeutung ist ferner die Tatsache, daß aus dem Zwischenboden 2 Zungen 40 und 41 bzw. 42 und 43 freigeschnitten sind, welche an den Schienen 16 und 17 seitlich anliegen, wodurch eine genaue Ausrichtung der Wandelemente erzielbar ist und beim Anziehen der Schrauben 33 und 34 ein Aufspreizen des jeweiligen Gewindekanals 16 und 17 verhindert wird.

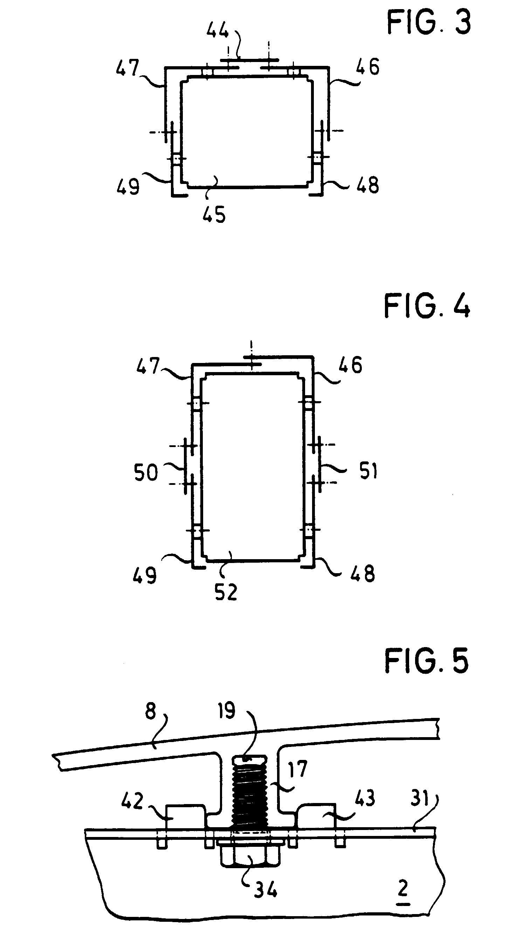

Mit der Schemaskizze Fig. 3 soll nochmals verdeutlicht werden, daß bei einem Gehäuse 1 mit rechteckförmigem Querschnitt, bei welchem die mit Türen, Klappen oder Fronttafeln von Einschüben gebildete Frontseite der breiteren Gehäusewand zugeordnet ist, für ein Variieren des Gehäuses in der Breite lediglich ein Zwischenwandelement 44 und Zwischenböden 45 variiert werden müssen. Die Winkelprofil-Wandelemente 46 und 47 und die Frontrahmen-Wandelemente 48 und 49 können jeweils wiederverwendet werden. Bei Verwendung sonst gleicher Wandelemente 46, 47, 48, 49 sind im Falle des Ausführungsbeispiels gemäß Fig. 4 mit einer an einer schmalen Gehäusewand vorgesehenen Frontseite zwei Zwischenwandelemente 50 und 51 und die Zwischenböden 52 zu variieren, wenn das Gehäuse lediglich in der Tiefe verändert werden soll.

Die Fig. 3 und 4 zeigen ferner, daß weitgehend beliebige rechteckförmige Gehäuseformen mit jeweils gleichen Wandelementen 46, 47, 48, 49 und unterschiedlich breiten Zwischenwandelementen 44, 50 und 51 bei entsprechend gestalteten Zwischenböden hergestellt werden können, wobei die Wandelemente miteinander verbunden und als segmentierte Hülle mit den Zwischenböden verschraubt sein können. Möglich ist ferner, daß die Wandelemente jeweils einzeln mit den Zwischenböden verschraubt werden oder daß bei hohen Stabilitätsanforderungen jeweils Mehrfachverschraubungen in der jeweiligen Zwischenbodenebene vorgenommen werden müssen, wozu vorteilhafterweise Gewindekanäle mitbenutzt werden, die für die Verbindungen der Wandelemente miteinander vorgesehen sind. Für Gehäuse mit relativ kleinem Querschnitt ist es denkbar, je nach Lage der Frontseite des betreffenden Gerätes ein oder zwei u-Profile zu verwenden und diese mit einem Zwischenwandelement zu verbinden oder einem die Rückwand bildenden u-Profil Frontrahmen-Wandelemente zuzuordnen.

Mit der Fig. 5 sei nochmals verdeutlicht, daß die Lage der Wandelemente, auch wenn sie miteinander verbunden sind, durch Ineingriffstehen der an den Zwischenböden angeformten Zungen mit den an den Wandelementen ausgebildeten Schienen bestimmt wird.

## Patentansprüche

1. Gehäuse für freistehende Automaten und dergleichen, bei welchen das Verhältnis der Stellflächenabmessungen zur Höhe relativ klein ist und für die Gehäusewände einzelne in Strangpreßtechnik aus Aluminium hergestellte, der Höhe des Gehäuses (1) entsprechende Wandelemente (8, 9, 10, 11, 12) vorgesehen sind,
dadurch gekennzeichnet,
daß Zwischenböden (2, 3) vorgesehen sind, welche in Ebenen quer zu den Wandelementen (8, 9, 10, 11, 12) angeordnet sind und mit welchen die Wandelemente (8, 9, 10, 11, 12) sich gegenseitig überlappend verschraubt sind.

2. Gehäuse nach Anspruch 1,
dadurch gekennzeichnet,
daß an den Wandelementen (8, 9, 10, 11, 12) jeweils einen Gewindekanal (18, 19, 26) einschließende Schienen (16, 17, 27) angeformt sind und
daß die Zwischenböden (2, 3) unmittelbar mit den Gewindekanälen (18, 19, 26) verschraubt sind.

3. Gehäuse nach Anspruch 1,
dadurch gekennzeichnet,
daß ein Zwischenboden als Träger für ein Dachelement (5) ausgebildet ist.

4. Gehäuse nach Anspruch 1,
dadurch gekennzeichnet,
daß ein Zwischenboden als ein dem Aufstellen des Gehäuses (1) dienender Montagerahmen (4) ausgebildet ist.

5. Gehäuse nach Anspruch 1,
dadurch gekennzeichnet,
daß an den Zwischenböden (2, 3) mit Durchgangsbohrungen 36, 37, 38) versehene Wangen (30, 31) schienenparallel angeformt sind
und
daß zusätzlich Zungen (40, 41 bzw. 42, 43) ausgebildet sind, welche die Schienen (16, 17) gabelförmig umgreifen.

6. Gehäuse nach Anspruch 1,
dadurch gekennzeichnet,
daß wenigstens eine Wand aus den Schenkeln zweier als Winkelprofile ausgebildeter Wandelemente (46, 47) gebildet ist.

7. Gehäuse nach Anspruch 1,
dadurch gekennzeichnet,
daß wenigstens eine Wand aus den Schenkeln zweier als Winkelprofile ausgebildeter Wandelemente (46, 47)und einem zwischengefügten Wandelement (44) gebildet ist.

8. Gehäuse nach Anspruch 1,
dadurch gekennzeichnet,
daß an den Zwischenböden (2, 3) sämtliche Führungs- und Befestigungsmittel für Einschübe und Einbauten, Scharnierelemente für Türen und Klappen sowie Mittel zum Befestigen der Wandelemete (8, 9, 10, 11, 12) ausgebildet bzw. angeordnet sind.

9. Gehäuse nach Anspruch 1,
dadurch gekennzeichnet,
daß die Wandelemente (8, 9, 10, 11, 12) im Überlappungsbereich mittels Klemmverbindungen (26, 27, 28, 29) gegenseitig verspannt und wenigstens die Winkelprofil- und Frontrahmen-Wandelemente (8, 9 bzw. 11, 12) mit den Zwischenböden (2, 3) verschraubt sind.

## Claims

1. A housing for free-standing slot machines and the like in which the ratio of the footprint to the height is relatively small, and individual wall elements (8, 9, 10, 11, 12) which are produced from aluminium by extrusion and correspond to the height of the housing (1) are provided for the housing walls, characterized in that intermediate floors (2, 3) are provided which are arranged in planes transverse to the wall elements (8, 9, 10, 11, 12) and by means of which the wall elements (8, 9, 10, 11, 12) are screwed such that they are mutually overlapping.

2. A housing according to Claim 1, characterized in that rails (16, 17, 27) each enclosing a threaded channel (18, 19, 26) are integrally formed on the wall elements (8, 9, 10, 11, 12), and in that the intermediate floors (2, 3) are screwed directly to the threaded channels (18, 19, 26).

3. A housing according to Claim 1, characterized in that an intermediate floor is constructed as a support for a roof element (5).

4. A housing according to Claim 1, characterized in that an intermediate floor is constructed as an assembly frame (4) serving for the placing on of the housing (1).

5. A housing according to Claim 1, characterized in that cheeks (30, 31) provided with throughbores (36, 37, 38) are integrally formed on the intermediate floors (2, 3), parallel to the rails, and in that additional tongues (40, 41 and 42, 43) which grip around the rails (16, 17) in the manner of a fork are constructed.

6. A housing according to Claim 1, characterized in that at least one wall is formed from the limbs of two wall elements (46, 47) constructed as angled profiles.

7. A housing according to Claim 1, characterized in that at least one wall is formed from the limbs of two wall elements (46, 47) constructed as angled profiles, and an interposed wall element (44).

8. A housing according to Claim 1, characterized in that all the guide and securing means for racks and fittings, hinge elements for doors and flaps and means for securing the wall elements (8, 9, 10, 11, 12) are constructed or arranged on the intermediate floors (2, 3).

9. A housing according to Claim 1, characterized in that the wall elements (8, 9, 10, 11, 12) are braced against one another in the overlapping region by means of clamping connections (26, 27, 28, 29) and at least the angled-profile and front-frame wall elements (8, 9 and 11, 12 respectively) are screwed to the intermediate floors (2, 3).

## Revendications

1. Carrosserie pour des automates sans attaches plafonnières ou murales et d'autres appareils analogues dans lesquels le rapport des dimensions de l'encombrement au sol à la hauteur est relativement petit et où l'on a prévu, pour les parois de carrosserie, différents éléments de paroi (8, 9, 10, 11, 12) correspondant à la hauteur de la carrosserie (1), fabriqués en aluminium selon la technique de filage à chaud,
caractérisé par le fait
qu'il est prévu des fonds intermédiaires (2, 3) qui sont disposés dans des plans transversalement aux éléments de paroi (8, 9, 10, 11, 12) et avec lesquels lesdits éléments de paroi (8, 9, 10, 11, 12) sont assemblés par vis en se chevauchant mutuellement.

2. Carrosserie selon la revendication 1,
caractérisé par le fait
que sur les éléments de paroi (8, 9, 10, 11, 12) sont moulés des rails (16, 17, 27) englobant respectivement un canal fileté (18, 19, 26) et
que les fonds intermédiaires (2, 3) sont directement assemblés par vis avec lesdits canaux filetés (18, 19, 26).

3. Carrosserie selon la revendication 1,
caractérisé par le fait
qu'un fond intermédiaire est réalisé comme support pour un élément de toit (5).

4. Carrosserie selon la revendication 1,
caractérisé par le fait
qu'un fond intermédiaire est réalisé comme cadre de montage (4) servant à l'installation de ladite carrosserie (1).

5. Carrosserie selon la revendication 1,
caractérisé par le fait
que sur les fonds intermédiaires (2, 3) sont formées, parallèlement aux rails, des faces latérales (30, 31) pourvues d'alésages de passage (36, 37, 38)
et
que sur lesdits fonds intermédiaires (2, 3) sont réalisées, en plus, des languettes (40, 41 ou 42, 43) qui entourent les rails (16, 17) à la manière d'une fourche.

6. Carrosserie selon la revendication 1,
caractérisé par le fait
qu'au moins une paroi est formée par les ailes de deux éléments de paroi (46, 47) réalisés comme profilés coudés.

7. Carrosserie selon la revendication 1,
caractérisé par le fait
qu'au moins une paroi est formée par les ailes de deux éléments de paroi (46, 47) réalisés comme profilés coudés et par un élément de paroi (44) intercalé.

8. Carrosserie selon la revendication 1,
caractérisé par le fait
que sur les fonds intermédiaires (2, 3) sont réalisés ou disposés tous les moyens de guidage et de fixation pour des tiroirs et éléments encastrés, des éléments de charnière pour des portes et volets ainsi que des moyens pour la fixation des éléments de paroi (8, 9, 10, 11, 12).

9. Carrosserie selon la revendication 1,
caractérisé par le fait
que les éléments de paroi (8, 9, 10, 11, 12) sont mutuellement resserrés au moyen d'assemblages par serrage (26, 27, 28, 29) et qu'au moins les éléments de paroi coudés et de cadre frontal (8, 9 ou 11, 12) sont assemblés par vis avec les fonds intermédiaires (2,3).
